# EUROPEAN PATENT APPLICATION

(11) **EP 4 215 435 A2**
(43) Date of publication of application: **26.07.2023**
(21) Application number: 22192228.9
(22) Date of filing: 25.08.2022
(51) Int. Cl.: B63H 9/08, B63H 21/17, B63B 39/06, H02S 40/10, B63B 1/14, B63B 35/44, B63B 15/00, B63B 7/00, B63B 1/20

(54) **SAIL YACHT OPERATING BY SOLAR POWER**

(30) Priority: 04.01.2022 KR 20220000820
(71) Applicant: BSE Co. Ltd., Seoul 08298 (KR)
(72) Inventor: Baek, Yun Gang, 08393 Seoul (KR)
(74) Representative: Botti & Ferrari S.p.A.

(57) **Abstract**

The present invention relates to a sail yacht operated by solar power generation, and provided is a sail yacht providing driving force through solar power generation, which is operated by the solar power generation, including: a power generation unit including a power generation module performing solar power generation; a wing unit located on the bottom of the power generation unit and stretching to a side from a center; a buoyancy unit allowing floating from a sea level on the bottom of the wing unit; and a blade including a steering fin extended to a front at a front side of the buoyancy unit.

## Description

### CROSS-REFERENCE TO RELATED APPLICATIONS

This application claims priority to and the benefit of Korean Patent Application No. 10-2022-0000820 filed in the Korean Intellectual Property Office on January 4, 2022, the entire contents of which are incorporated herein by reference.

### TECHNICAL FIELD

The present invention relates to a sail yacht operating by solar power generation.

### BACKGROUND ART

A yacht is a ship that is used for sights or sports at rivers, lakes, or sea, and can be divided into a sailing yacht that uses power of the wind and a motor yacht that operates by power of a machine, and among them, the sailing yacht is operated using wind pressure and lift acting on a main sail installed in a master. Since whether it is possible to operate the sailing yacht entirely depends on the wind, the operation of the sailing yacht itself is impossible when there is no wind or there is no sufficient wind enough for the operation. To this end, an idea of a yacht that is mounted with a solar cell panel part and self-operated by solar cell generation is continuously proposed, and yachts consisting of the main sale of the main sale were proposed, and in the related art, a yacht is proposed in which the main sail is constituted by the solar cell panel part. There is a technical feature that simultaneously with using the lift by the wind, a soft sail can be unfolded on each of both left and right sides of the solar cell panel part to enable the operation by the wind and self generation is enabled by the solar cell panel part by using both the solar cell panel part and the soft sail or using only the solar cell panel part. However, since the solar cell panel part should have any degree of area in order to operate the yacht by the wind, the technique operates the solar cell panel part to face various directions as a master driving unit while a solar cell panel part having a predetermined area is installed in a mast, and when the solar cell panel part is refracted or rotated at a predetermined angle by mounting a large-area panel part on the mast of yacht, there is a risk that the yacht itself will be overturned while a center of gravity of the yacht is rapidly changed, and as a result, there is a limit in that this is combined with an actual yacht and used.

Moreover, it is difficult to prevent solar power generation efficiency from being lowered due to an increase in temperature by continuous exposure of the solar panel part, and there is a problem in that recovering and unfolding the sail is more difficult. In addition, the reality is that there is continuously a risk that the yacht will be sunk when the yacht is damaged due to a collision with an undersea feature during sailing, and a countermeasure against this is required.

### SUMMARY OF THE INVENTION

An exemplary embodiment of the present invention has been made in an effort to accumulate energy required for a yacht through continuous solar power generation.

An exemplary embodiment of the present invention has been made in an effort to drive a plurality of components in link with each other in the process of transferring the energy accumulated through the solar power generation.

An exemplary embodiment of the present invention has been made in an effort to provide a region where a panel part is additionally arranged by extending a wing unit in order to increase a solar power generation amount.

An exemplary embodiment of the present invention has been made in an effort to arrange a suspension in the wing unit for sailing stability of the yacht.

An exemplary embodiment of the present invention has been made in an effort to prevent sinking in spite of collision and damage by providing a plurality of air accommodation spaces partitioned from each other by a lift part providing lift.

The present invention relates to a sail yacht operated by solar power generation, and an exemplary embodiment of the present invention provides a sail yacht providing driving force through solar power generation, which is operated by the solar power generation, including: a power generation unit including a power generation module performing solar power generation; a wing unit located on the bottom of the power generation unit and stretching to a side from a center; a buoyancy unit allowing floating from a sea level on the bottom of the wing unit; and a blade including a steering fin extended to a front at a front side of the buoyancy unit.

In addition, the power generation unit may include a first frame which is towed by a first wire, and rotatable and erectable upward, and a pair of second frames which are towed by a second wire, and each rotated and extended to the side.

Further, the power generation unit may include a first sail which may be connected to the first frame and selectively extended, and a second sail which may be wound on the second frame and selectively extended, and the second sail may be reversely wound from the second frame, and extended upward along the erected first frame when being extended.

Further, the power generation unit may include a power generation module, and the power generation module may include a panel part facing the sun, an interlocking wire interlocking with the panel part, and a motor tossing the interlocking wire and steering the panel part to face the sun.
Further, the panel part may be independently steered with X and Y directions as axis on the plane, and the interlocking wire may include a first interlocking wire towing the panel part to be steered based on an X axis and a second interlocking wire towing the panel part to be steered based on a Y axis, and the motor may include a first motor transmitting towing power to the first interlocking wire and a second motor transmitting the towing power to the second interlocking wire.

Further, the interlocking wire may be connected to the panel part, but an elastic body may be provided in a connection path.

Further, the power generation unit may include a cooling unit spraying cooling water to the panel part and cooling the panel part, and a guide rail guiding a movement direction of the cooling unit, and the guide rail may be extended in a direction in which the panel part is arranged to allow the cooling unit to move along an array of the panel part.

Further, the buoyancy unit may include a link unit which independently rotates at least centering on a shaft, and a first floating portion and a second floating portion which interlock with each other through the link unit.

Further, the second frame may include a pair of elastic units elastically towing the second wire at both end, a roller switching an extension path on the extension path of the second wire, and a steering motor which is rotated forward or rotated reversely while winding the second wire on the extension path of the second wire, and determining a rotation direction.

Further, the wing unit may include a base portion interposed between the power generation unit and the buoyancy unit, a pair of wing portions stretching to both sides centering on the base portion, and a plurality of extension portions provided on the bottoms of the wing portions, respectively, having a plurality of hollow portions partitioned from each other therein, and extended downward from an outer periphery.

Further, the base portion may include a first power unit, a first rotation shaft rotated by the first power unit and having a plurality of wing worm gears provided in the extension direction, a wing worm wheel rotation shaft rotated in link with the wing worm gear and located within an extension section, and having a male screw portion formed on an outer diameter, a withdrawal pipe having a female screw corresponding to the male screw portion provided on an inner diameter, and withdrawn and introduced in a rotation direction of the male screw, and base pipes having an inner periphery corresponding to an outer periphery of the withdrawal provided therein, and guiding the withdrawal to be withdrawn or introduced while not being rotated.

Further, the wing unit may include a housing housing a driving unit, and a suspension connected to the housing and performing buffering in an upper and lower direction, and the driving unit may include a second rotation shaft rotated by the second power unit and having a plurality of elevation worm gears provided in the extension direction, a wing worm wheel rotation shaft rotated in link with the elevation worm gear and located within an extension section, and including a screw portion having a male screw formed on an outer diameter, and an interlocking shaft having a thread corresponding to the screw portion, and withdrawn and introduced in the rotation direction of the screw portion.

Further, a first guide guiding the first interlocking wire in the X axis direction on the plane and a second guide guiding the second interlocking wire in the Y axis direction may be included, the second guide may exceed a width of a cabin supporting the power generation module, but may be fixed to a plurality of extension boards extended in the Y axis direction on the cabin and arranged in the X axis direction, and the plurality of extension boards may be connected by the connection frame of which both ends are extended in the X axis direction to form a fluid passing area between the plurality of extension boards.

Further, the buoyancy unit may include a reinforcing shell coupled to at least a part of the outer periphery of the floating body, and the reinforcing shell is coupled to the floating body by sequentially penetrating the reinforcing shell and the reinforcing material by a fixation portion, the floating body may have a plurality of air spaces which are partitioned from each other and airtightness is maintained therein, and at least some of the air spaces are partitioned from each other and consecutively arranged and configured in a ring type, and the floating body may include one or more reinforcing materials which are manufactured through injection and maintain a coupling state between the floating bodies.

Further, the blade may further include a rotation fin connecting one end side of a steering fin to be rotatable with the buoyancy unit, and a driving rod connected to the other end side to transmit rotation power from the power unit so that the other end side of the steering fin rotates centering on the rotation pin.

According to an exemplary embodiment of the present invention, a sail yacht operated by solar power generation of accumulating energy required for a yacht through continuous solar power generation can be provided.

According to an exemplary embodiment of the present invention, a sail yacht operated by solar power generation, which drives a plurality of components in link with each other in the process of transferring the energy accumulated through the solar power generation can be provided.

According to an exemplary embodiment of the present invention, a sail yacht operated by solar power generation, which provides a region where a panel part is additionally arranged by extending a wing unit in order to increase a solar power generation amount.

According to an exemplary embodiment of the present invention, a sail yacht operated by solar power generation, which arranges a suspension in the wing unit for sailing stability of the yacht.

According to an exemplary embodiment of the present invention, a sail yacht operated by solar power generation, which prevents sinking in spite of collision and damage by providing a plurality of air accommodation spaces partitioned from each other by a lift part providing lift.

### BRIEF DESCRIPTION OF THE DRAWINGS

FIG. 1 is a perspective view of a state in which a first sail and a second sail are extended through a first frame and a second frame according to an exemplary embodiment of the present invention.
FIG. 2 is a perspective view illustrating a state in which the first frame and the second frame are not extended according to an exemplary embodiment of the present invention.
FIG. 3 is a diagram illustrating a power generation unit according to an exemplary embodiment of the present invention, and FIG. 3A is a diagram illustrating a state in which the first frame and the second frame are not extended and FIG. 3B is a diagram illustrating a state in which the first frame and the second frame are extended.
FIG. 4 is a diagram disclosed to describe that the first frame and the second frame may vary depending on a wind direction according to an exemplary embodiment of the present invention.
FIG. 5 is a diagram illustrating that the second frame is rotated according to an exemplary embodiment of the present invention.
FIG. 6 is a diagram illustrating that the second sail is extended according to an exemplary embodiment of the present invention, and FIG. 6A is a diagram illustrating that the second sail is extended and FIG. 6B is a diagram illustrating that a slide ball towing the second sail to be extended moves along a guide.
FIG. 7 is a diagram illustrating states before and after lifting of a lifting unit according to an exemplary embodiment of the present invention.
FIG. 8 is a perspective view illustrating a power generation module performing solar power generation according to an exemplary embodiment of the present invention.
FIG. 9 is an exploded perspective view of the power generation module according to an exemplary embodiment of the present invention.
FIG. 10 is a diagram illustrating a cooling unit cooling the power generation module according to the present invention.
FIG. 11A is a diagram illustrating that a wing unit is extended to the side according to an exemplary embodiment of the present invention and FIG. 11B is a diagram illustrating that the wing unit is not extended according to an exemplary embodiment of the present invention.
FIG. 12 is a diagram illustrating a base portion, a wing portion, and a floating portion of the wing unit according to an exemplary embodiment of the present invention.
FIG. 13 illustrates a structure for withdrawal and introduction of the wing portion from the base portion according to an exemplary embodiment of the present invention, and FIG. 13A illustrates a power transmission structure through a worm gear and FIG. 13B illustrates an internal structure of a cover portion.
FIG. 14 illustrates a structure for withdrawal and introduction of the wing portion according to an exemplary embodiment of the present invention, and FIG. 14A illustrates a cross-sectional view of a withdrawal direction and FIG. 14B illustrates interlocking between a withdrawal pipe and a wing worm wheel rotation shaft.
FIG. 15 is a diagram illustrating a side surface of the wing portion according to an exemplary embodiment of the present invention.
FIG. 16 is a diagram a mechanism in which the floating portion moves downward from the wing portion according to an exemplary embodiment of the present invention.
FIG. 17A illustrates a part of each of the wing portion and the floating portion according to an exemplary embodiment of the present invention and FIG. 17B is a diagram illustrating a suspension.
FIG. 18 is a diagram illustrating a lift part according to an exemplary embodiment of the present invention.
FIG. 19 is a perspective view illustrating a floating body according to the exemplary embodiment of the present invention.
FIG. 20 is a cross-sectional view illustrating an air space of the floating body according to an exemplary embodiment of the present invention.
FIG. 21 is a diagram illustrating a connection frame and an extension board according to another embodiment of the present invention.
FIG. 22A is a diagram illustrating that the cooling unit and a cabin are connected according to another embodiment of the present invention and FIG. 22B is a diagram illustrating movement of the connected cooling unit according to another embodiment of the present invention.
FIG. 23 is a diagram illustrating the cooling unit according to another embodiment of the present invention.
FIG. 24A is a diagram illustrating the cooling unit according to another embodiment of the present invention.

### DETAILED DESCRIPTION

Hereinafter, specific embodiments of the present invention will be described with reference to the accompanying drawings. However, this is just an example and the present invention is not limited thereto.

In describing the present invention, a detailed description of the known art related with the present invention will be omitted when it is judged that the detailed description may unnecessarily make the gist of the present invention unclear. In addition, terms to be described below as terms which are defined in consideration of functions in the present invention may vary depending on the intention of a user or an operator or usual practice. Accordingly, the terms need to be defined based on contents throughout this specification.

The technical idea of the present invention is determined by the claims, and the following embodiments are just one means for efficiently explaining the technical idea of the present invention to those skilled in the art to which the present invention belongs.

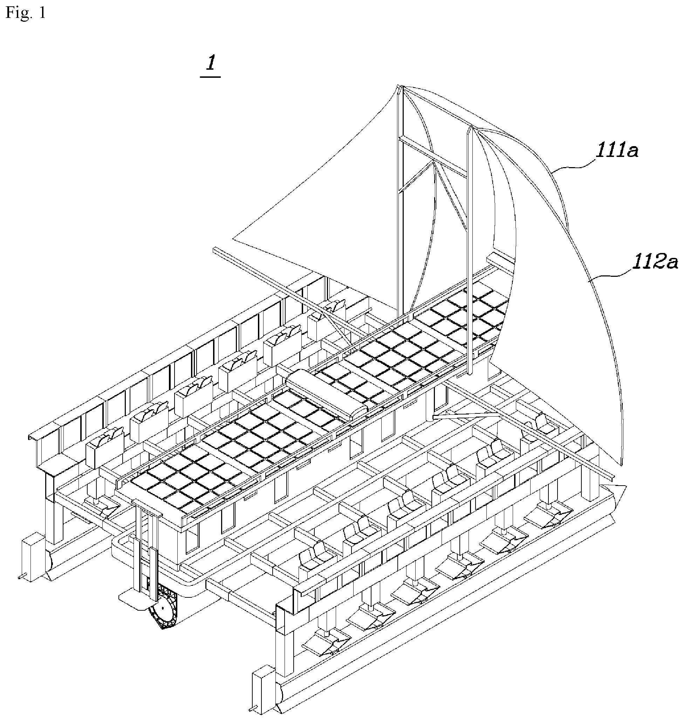

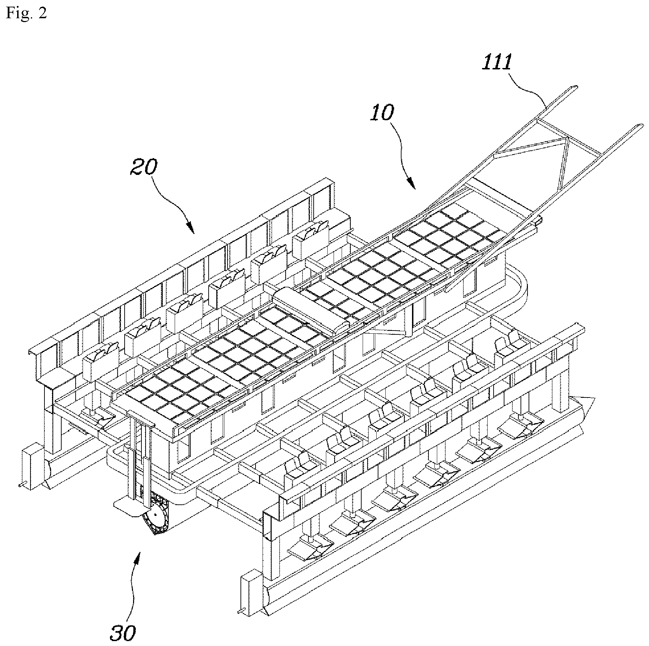

FIG. 1 is a perspective view of a state in which a first sail 111a and a second sail 112a are extended through a first frame 111 and a second frame 112 according to an exemplary embodiment of the present invention and FIG. 2 is a perspective view illustrating a state in which the first frame 111 and the second frame 112 are not extended according to an exemplary embodiment of the present invention.

Referring to FIGS. 1 and 2, the present invention relates to a sail yacht 1 (hereinafter, referred to as sail yacht 1) which provides driving force through solar power generation. The sail yacht 1 may include a power generation unit 10 including a power generation module 120 performing the solar power generation, a wing unit 20 located on the bottom of the power generation unit 10 and stretching from the center to the side, and a buoyancy unit 30 floating from a water surface S from the bottom of the wing unit 20.

The sail yacht 1 may include a power engine that generates propulsion power through energy acquired from the power generation module 120, and include a sail to propel using the wind. Here, at least the sale may be a component included, and the sail may be divided into a first sail 111a and a second sail 112a. The first sail 111a may be a sail connected to the first frame 111 and extended through a wire, and the second sail may be a sail kept while being wound on the second frame 112, and then selectively extended upward along the first frame 111.

In addition, when the sail yacht 1 includes the power engine, the sail yacht 1 may further include an auxiliary power engine, which may be provided in the wing unit 20. The wing unit 20 may be located to be spaced apart to both sides of the sail yacht 1 centering on a cabin 130 as illustrated, and arranged by accessing the cabin 130 to be adjacent to the cabin 130. This is optional, and will be described below in detail.

Further, the power generation unit 10 may have multiple solar panel parts facing an upper surface in order to perform the solar power generation. In the case of the solar power generation, when a temperature of the panel part facing solar power deviates from a predetermined interval, power generation efficiency is lowered, so a cooling component may be included, which is capable of maintaining the temperature within the predetermined interval. The component will also be described below in detail.

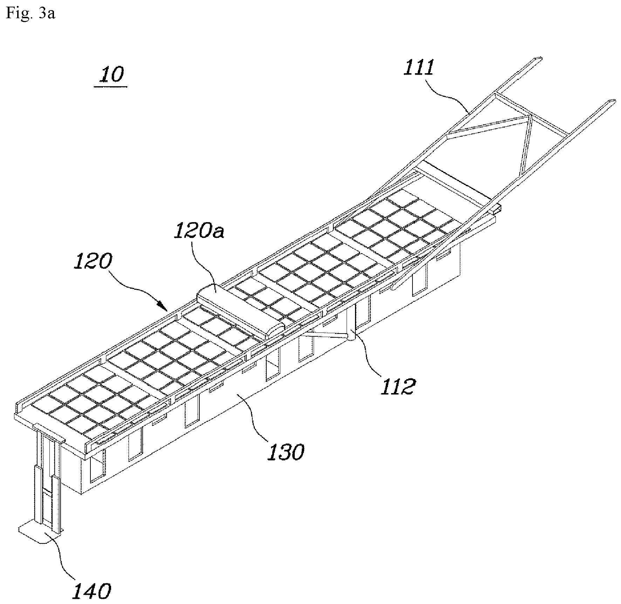

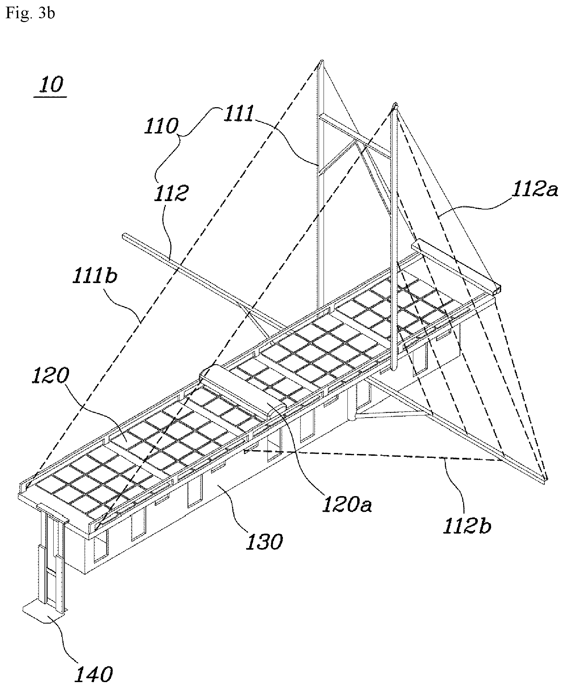

FIG. 3 is a diagram illustrating a power generation unit 10 according to an exemplary embodiment of the present invention, and FIG. 3A is a diagram illustrating a state in which the first frame 111 and the second frame 112 are not extended and FIG. 3B is a diagram illustrating a state in which the first frame 111 and the second frame 112 are extended.

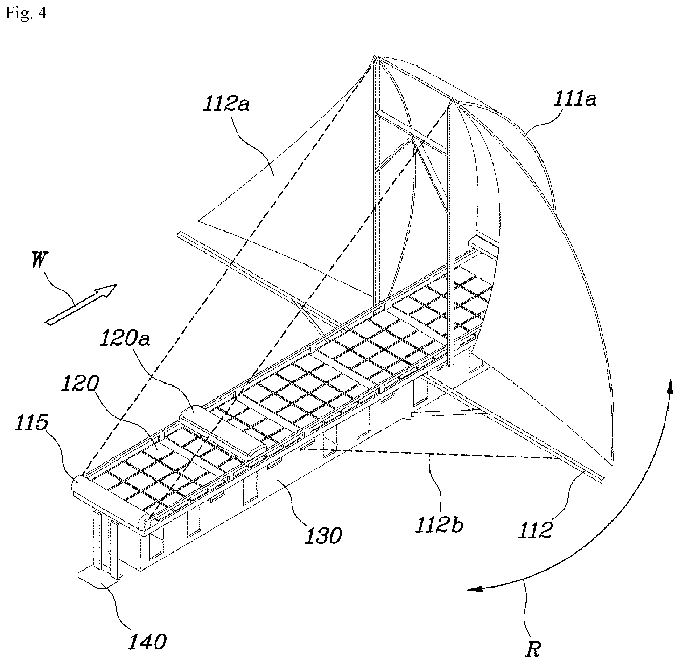

Referring to FIG. 3, the power generation unit 10 may include a first frame 111 which is towed by the first wire 111b, and rotatable and erectable upward, and a pair of second frames 112 which are towed by the second wire 112b, and each rotated and extended to the side. Here, the first frame 111 may be towed and erected by the first wire 111b. Here, when the first frame is located at a position of towed and erected by the first wire 111b, the first frame 111 may be stopped to rotate by the wire connected to the first frame 111 from an opposite side to the first wire 111b. That is, a length of the wire may be determined so that even a posture of the first frame 111 erected is permitted. Therefore, the first wire 111b is towed, and as a result, the first frame may maintain the erected position. The first wire 111b may be wound or reversely wound by a component such as a winch (reference numeral 115 in FIG. 4), and may tow or not tow, and neglect the first frame 111.

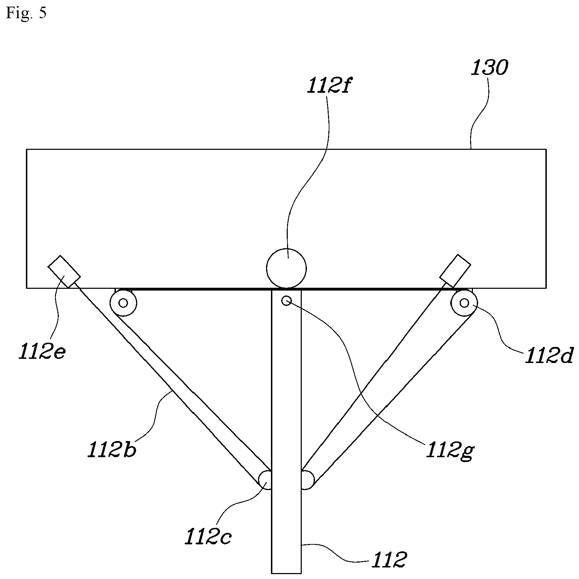

Meanwhile, the power generation unit 10 may include a first sail 111a which may be connected to the first frame 111 and selectively extended, and a second sail 112a which may be wound on the second frame 112 and selectively extended, and the second sail 112a may be reversely wound from the second frame 112, and extended upward along the erected first frame 111 when being extended. A winding structure will be described in detail through FIG. 5.

FIG. 4 is a diagram disclosed to describe that the first frame 111 and the second frame 112 may vary depending on a wind direction W according to an exemplary embodiment of the present invention.

Referring to FIG. 4, the first sail 111a and the second sail 112a may be selectively extended as described above. For example, in order to use the wind as propulsion power, when the wind is blown, the propulsion power may be acquired in a direction to move forward by adjusting an angle to be separated from a direction in which the wind is blown by extending the second sail 112a. Therefore, for a fair wind blown in a direction to be progressed, which is the same direction as the illustrated wind direction W, the first sail 111a is extended to maximize the propulsion power to increase a wind area.

Here, only extending or not extending the first sail 111a is possible, and a direction transition is not made, but the direction transition of the second sail 112a is possible. Here, the direction transition is made by rotating the second frame 112, and the rotation of the second frame 112 may be determined by a driving direction (forward rotation and reverse rotation) of a steering motor 112f adjacent to a rotation center. This will be described in detail through FIG. 5 below.

FIG. 5 is a diagram illustrating that the second frame 112 is rotated according to an exemplary embodiment of the present invention.

Referring to FIG. 5, the second frame 112 may include a pair of elastic units 112e elastically towing the second wire 112b at both end and a roller switching an extension path on the extension path of the second wire 112b, and a steering motor 112f which is rotated forward or rotated reversely while winding the second wire 112b on the extension path of the second wire 112b, and determining a rotation direction R.

One end of the second wire 112b may be connected to the elastic unit 112e. The elastic unit 112e may be a spring and may be a cylinder. When it is designed that as stronger tension acts on the second wire 112b, intervention of elasticity increases, various structures may be applied. The second wire 112b is extended from the one end and extended to a body 231 of the second frame 112 to detour a frame roller 112c coupled to the body 231.

Here, the second wire 112b detours the frame roller 112c and the extension direction is switched to turn to a tensile roller 112d located at one end of a rotating range of the second frame 112. The second wire 112b detours the tensile roller 112d and the second wire 112b may be extended to a rotation center shaft 112g of the second frame 112. The second wirer 112b extended to the rotation center shaft 112g may be wound on the steering motor 112f at least one turn and extended to the other end of the rotating range. The other end of the second wire 112b may be coupled to the elastic unit 112e through the frame roller 112c coupled to the body 231 of the second frame 112 by detouring the tensile roller 112d at the other end.

That is, the second frame 112 may be rotated to a side to which an internal of the second wire 112b is allocated less by the steering motor 112f. When the second wire 112b requires more allocations by a rotation trajectory, the elasticity intervenes from the elastic unit 112e and supports the second wire 112b. In this example, the elastic unit 112e and the tensile roller 112d are located in contact with the cabin 130, and an extension path of the wire may be shown like a triangle on a plane side.

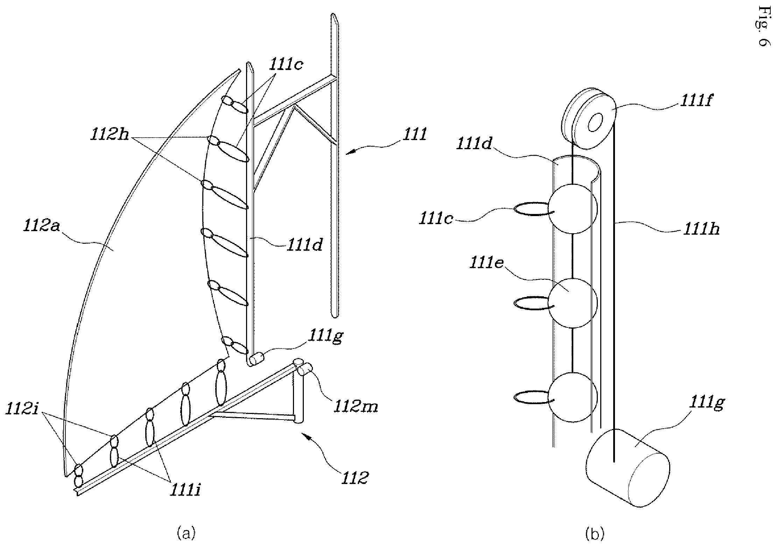

FIG. 6 is a diagram illustrating that the second sail 112a is extended according to an exemplary embodiment of the present invention, and FIG. 6A is a diagram illustrating that the second sail 112a is extended and FIG. 6B is a diagram illustrating that a slide ball 111e towing the second sail 112a to be extended moves along a guide 111d.

Referring to FIG. 6A, the second sail 112a may be connected to the first frame 111 and the second frame 112 through rings 111c, 111i, 112h, and 112i. The second sail 112a is wound on and kept in the first frame 111, and then when extending the second sail 112a is required, the second sail 112a may be extended upward along the first frame 111. When the second sail 112a is wound on the second frame 112, the second sail 112a may be wound on a shaft rotated by a winding motor 112m, and when the second sail 112a is extended upward along the first frame 111, the second sail 112a may be extended upward by an elevation winch 111g. In this case, the winding motor 112m and the elevation winch 111g alternately transmit the power to each perform winding or extending. The winding motor 112m and the elevation winch 111g further include a clutch (not illustrated) in order to alternately transmit the power to prevent the power from being transmitted.

The elevation winch 111g may extend the second sail 112a upward by winding or reversely winding a towing wire 111h like the winch 115 as illustrated in FIG. 6B. The guide 111d which is a component extended upward when the first frame 111 is erected may be formed in a tubular form in which one side is incised. Inside the guide 111d, a plurality of slide balls 111e connected by the towing wire 111h may be provided spaced apart from each other by a predetermined distance and the rings 112h and 112i may be coupled to each slide ball 111e. Therefore, the rings 112h and 112i coupled to the slide ball 111e may be protruded through an incised region of the guide 111d, and the second sail 111a may be connected through the rings 111c, 111i, 112h, and 112i.

Further, the towing wire 111h may be towed by the elevation winch 111g by detouring a pulley 111f. That is, the towing wire 111h is towed by the elevation winch 111g and the slide ball 111e is guided to the guide 111d, and when the slide ball 111e is raised, the second sail 112a connected through the rings 111c, 111i, 112h, and 112i is extended.

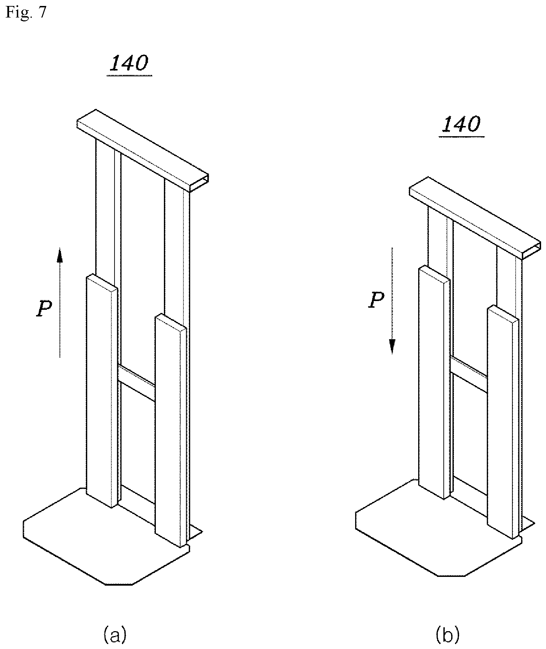

FIG. 7 is a diagram illustrating states before and after lifting of a lifting unit 140 according to an exemplary embodiment of the present invention.

Referring to FIG. 7, the lifting unit 140 as a means for lifting a small yacht may be provided at a rear of the yacht. When the lifting unit 140 moves up and down as illustrated, the lifting unit 140 may perform lifting and may be driven through components such as a chain, a gear, etc. Of course, it is also possible to apply other components.

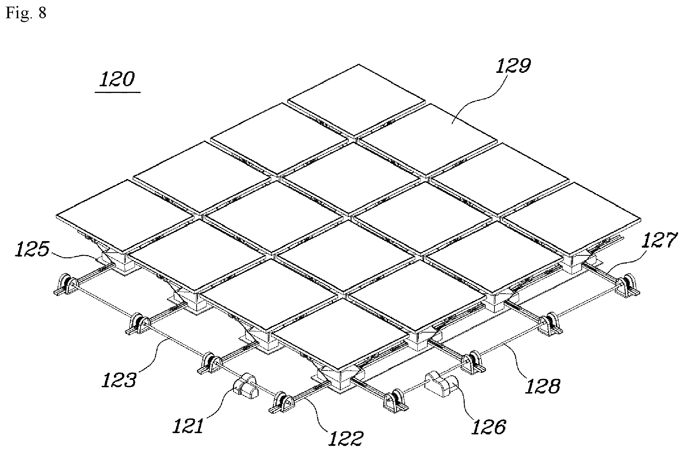

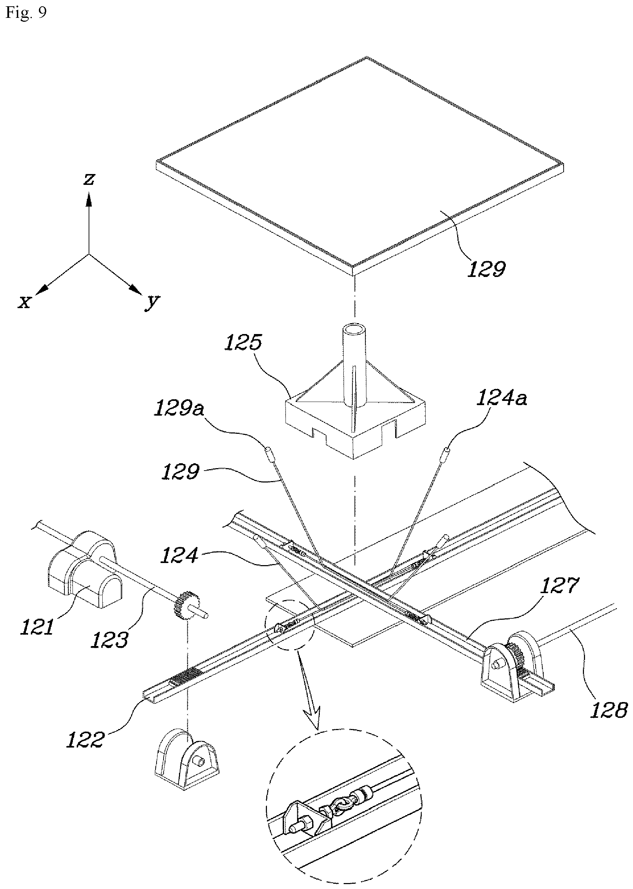

FIG. 8 is a perspective view illustrating a power generation module 120 performing solar power generation according to an exemplary embodiment of the present invention and FIG. 9 is an exploded perspective view of the power generation module 120 according to an exemplary embodiment of the present invention.

Referring to FIGS. 8 and 9, the power generation unit 10 may include the power generation module 120. The power generation module 120 may include a panel part 120c facing the sun, an interlocking wire interlocking with the panel part 120c, and a motor tossing the interlocking wire and steering the panel part 120c to face the sun.

Specifically, the panel part 120c may be independently steered with X and Y directions as axis on the plane, the interlocking wire may include a first interlocking wire 124 towing the panel part to be steered based on an X axis and a second interlocking wire 129 towing the panel part to be steered based on a Y axis, and the motor may include a first motor 121 transmitting towing power to the first interlocking wire 124 and a second motor 126 transmitting the towing power to the second interlocking wire 129.

The first motor 121 may generate rotational force through a first interlocking shaft 123, and a plurality of pinions provided on the first interlocking shaft 123 may be engaged with a rack gear fixed with a first guide 122. The rack gear may move forward and backward in the X direction by rotation of the pinion. The forward and backward movement of the rack gear may move the first guide 122 fixed with the rack gear forward and backward, and may tension the first interlocking wire 124 coupled to the first guide 122 by a bracket in forward and backward movement directions. The tension in the forward and backward movement directions may steer the panel part 120c. That is, the panel part 120c may be steered in the X direction by driving the motor unit to face the sun, and as a result, a high-efficiency incident angle may be continuously maintained even with the elapse of time.

Of course, the high-efficiency incident angle may be steered in the Y direction in addition to the X direction. The second motor 126 may generate rotational force through a second interlocking shaft 128, and a plurality of pinions provided on the second interlocking shaft 128 may be engaged with the rack gear fixed with a second guide 127. The rack gear may move forward and backward in the Y direction by the rotation of the pinion. The forward and backward movement of the rack gear may move the second guide 127 fixed with the rack gear forward and backward, and may tension the second interlocking wire 129 coupled to the second guide 127 by the bracket in the forward and backward movement directions. The tension in the forward and backward movement directions may steer the panel part 120c.

Furthermore, the first interlocking wire 124 and the second interlocking wire 129 are connected to the panel part 120c, but a buffer material may be provided in a connection path. The connection path may be a component that is provided at ends of the first interlocking wire 124 and the second interlocking wire 129, and connected to the panel part 120c. The buffer material may alleviate an impact applied to the panel part 120c, and continuously allow a steering angle to be kept.

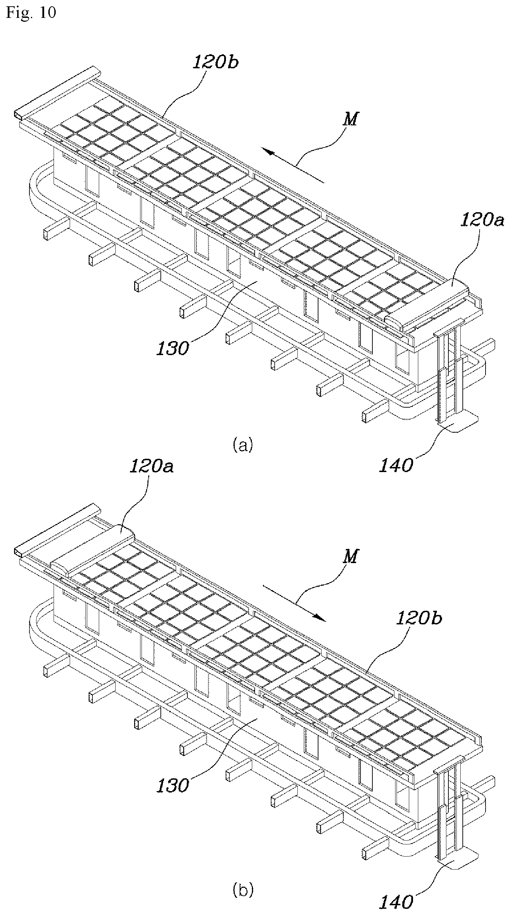

FIG. 10 is a diagram illustrating a cooling unit 120a cooling the power generation module 120 according to the present invention.

Referring to FIG. 10, the power generation unit 10 may further include a cooling unit 120a spraying cooling water to the panel part 120c and cooling the panel part 120c, and a rail unit 120b guiding a movement direction M of the cooling unit 120a. The cooling water may be rainwater. For example, seawater may be used as the cooling water, but salinity remains in a panel part which is continuously exposed to sunlight and a surface of the panel part is contaminated and solar power efficiency may be lowered. Accordingly, freshwater such as the rainwater may be used.

When the cooling water is the rainwater, the power generation module may further include a storage unit storing the rainwater, and the cooling unit 120a may also be provided in a part of the cabin 130, and further include components such as the storage unit, and a connection line and a pump supplying the cooling water.

Meanwhile, the cooling unit 120a moves onto the panel part 120c arranged in a longitudinal direction of the sail yacht 1, and should be able to move in non-contact with the cooling unit 120a in order to spray the cooling water. To this end, the rain unit 120b may be provided in a direction in which the panel part 120c is arranged, and both ends of the cooling unit 120a may be connected and moved along the rain unit 120b. The movement may be achieved by coupling of a gear or a wheel, and various components applicable thereto may be replaced and applied in order to move the cooling unit 120a.

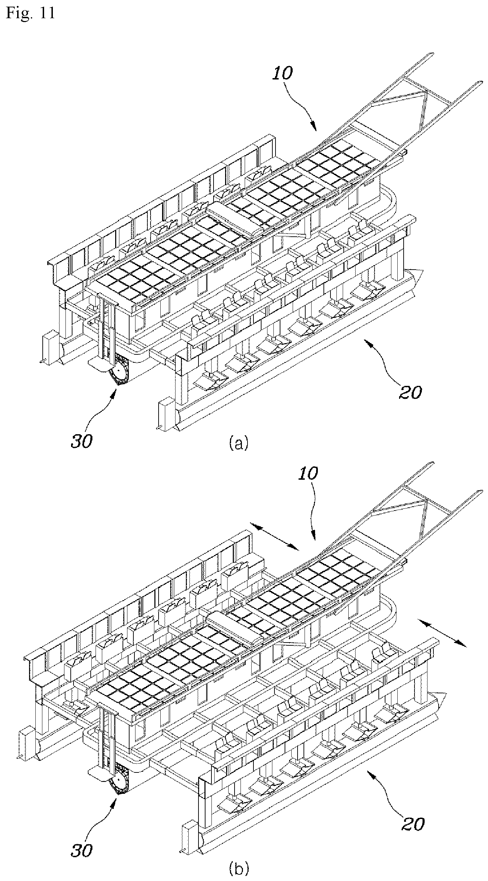

FIG. 11A is a diagram illustrating that a wing unit 20 is extended to the side according to an exemplary embodiment of the present invention and FIG. 11B is a diagram illustrating that the wing unit 20 is not extended according to an exemplary embodiment of the present invention.

Referring to FIG. 11, the wing unit 20, may include a base portion 210 interposed between the power generation unit 10 and the buoyancy unit 30, a pair of wing portions 220 stretching to both sides centering on the base portion 210, and floating portions 230 provided on the bottoms of the wing portions 220, respectively.

Here, the wing portion 220 may further include one or more chairs 220a disposed in a direction of being withdrawn by the stretching, the chair 220a may further include a panel part accommodation box accommodating the auxiliary panel part 120c, and a plurality of auxiliary panel parts 120c are hinged and accommodated in the panel accommodation box, and selectively withdrawn and extended onto an expanded space by the withdrawing.

Specifically, the plurality of auxiliary panel parts 120c may be hinged and accommodated in the panel part accommodation box. The hinging is achieved through a torsion spring 226a and a moment may be generated in an unfolding direction. That is, the wing portion 220 may be provided to be unfolded in the expanded space while being extended to the side from the base portion 210. In addition, in order to recover the auxiliary panel part 120c inside the panel part accommodation box, the wing portion 220 is connected to the plurality of auxiliary panel parts by the component such as the winch 115 and tows the extended wire to recover the auxiliary panel part 120c. Of course, the wing portion 220 may be hinged and recovered in an opposite direction to the direction in which the moment of the torsion spring 226a is generated when being recovered. Through this, when the tension of the wire relieved, the plurality of auxiliary panel parts 120c may be unfolded in the direction in which the moment is generated.

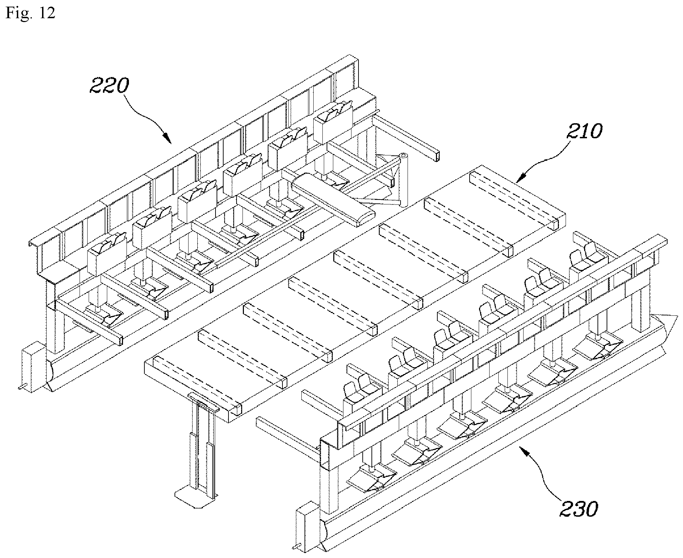

FIG. 12 is a diagram illustrating a base portion 210, a wing portion 220, and a floating portion 230 of the wing unit 20 according to an exemplary embodiment of the present invention.

Referring to FIG. 12, the base portion 210 may include a first power unit 212, a first rotation shaft 213 rotated by the first power unit 212 and having a plurality of wing worm gears 214 provided in the extension direction, a wing worm wheel rotation shaft 216b rotated in link with the wing worm gear 214 and located within an extension section, and having a male screw portion 216c formed on an outer diameter, a withdrawal pipe 215 having a female screw corresponding to the male screw portion 216c provided on an inner diameter, and withdrawn and introduced in a rotation direction of the male screw, and base pipes 217a and 217b having an inner periphery corresponding to an outer periphery of the withdrawal 215 provided therein, and guiding the withdrawal 215 to be withdrawn or introduced while not being rotated (111d).

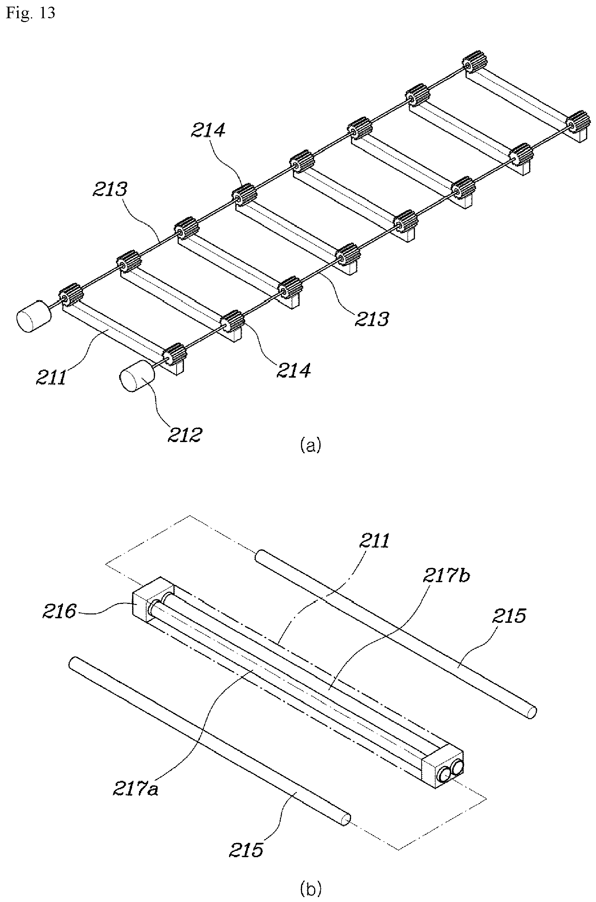

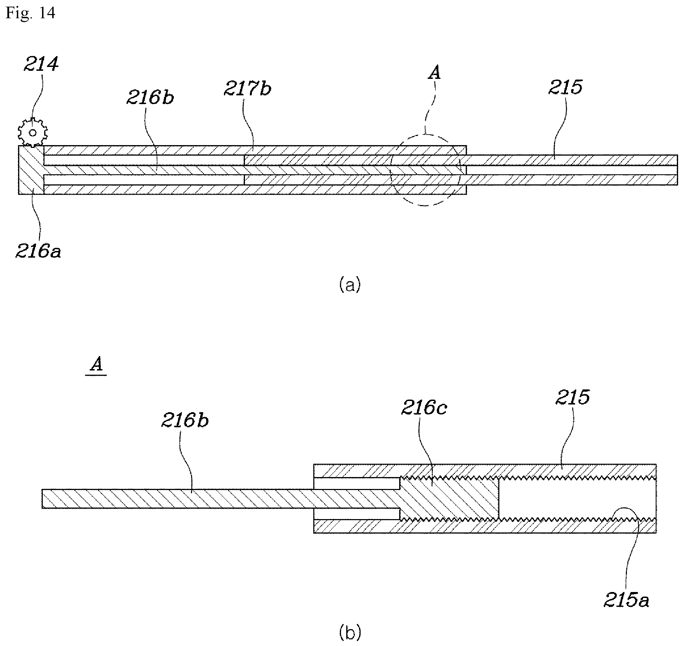

The base pipes 217a and 217b are connected to the wing portion 220 to allow the wing portion 220 to move to the side based on the base portion 210. That is, the base pipes 217a and 217b include a component which may move the wing portion 220 to the side or locate the wing portion moved to the side to be adjacent to the inside therein. This will be described in detail with reference to FIGS. 13 and 14 below.

FIG. 13 illustrates a structure for withdrawal and introduction of the wing portion 220 from the base portion 210 according to an exemplary embodiment of the present invention, and FIG. 13A illustrates a power transmission structure through a worm gear and FIG. 13B illustrates an internal structure of a cover portion 211.

Referring to FIG. 13A and 13B, the withdrawal pipe 215 may be located inside the base pipes 217a and 217b as described above, and a pair of withdrawal pipes 215 may be inserted into base pipes 217a and 217b, and withdrawn and introduced to both sides, respectively with guidance of the inner diameters of the base pipes 217a and 217b and moved. In the process of the movement, the wing portion 220 connected to a with-drawl-direction end of the withdrawal pipe 215 may be moved to the side from the base portion 210 as large as the withdrawal pipe 215 is withdrawn or introduced.

Power for moving the withdrawal pipe 215 is generated by the first power unit 212. When the first power unit 212 is the motor, the motor is connected to the rotating first rotation shaft 213 to transmit the power and a plurality of wing worm gears 214 may be rotated, which are arranged on the first rotation shaft 213 at a predetermined interval. The wing worm gear 214 may be driven in link with a worm wheel gear and may move the withdrawal pipe 215. This will be described in more detail with reference to FIG. 14. FIG. 14 illustrates a structure for withdrawal and introduction of the wing portion 220 according to an exemplary embodiment of the present invention, and FIG. 14A illustrates a cross-sectional view of a withdrawal direction and FIG. 14B illustrates interlocking between a withdrawal pipe 215 and a wing worm wheel rotation shaft 216b.

Referring to FIG. 14, the wing worm gear 214 may be rotated in link with the wing worm wheel gear 216a. The extended wing worm wheel rotation shaft 216b may be rotated centering on a center of the wing worm wheel gear 216a. The male screw portion 216c is provided at the extension end of the wing worm wheel rotation shaft 216b and the male screw may be formed for the rotation, and the female screw corresponding thereto may be provided on the inner diameter of the withdrawal pipe 215. Further, the outer diameter of the withdrawal pipe 215 may be in surface contact with the inner diameter of the base pipe to slide.

That is, as the wing worm wheel rotation shaft 216b is rotated, the connection between the male screw and the female screw is interlocked during the withdrawal to withdraw or introduce the withdrawal pipe 215. In this case, a key-groove structure may be formed in the inner diameters of the base pipes 217a and 217b, which is coupled to the outer diameter of the withdrawal pipe 215 so that the withdrawal pipe 215 is not rotated and may move only in the withdrawal and introduction directions.

That is, a groove may be formed while being incised as large as maximum sections of withdrawal and introduction, and a key may be restrained in the rotation direction in response to the groove. The key-groove structure is extended to guide the withdrawal direction of the with drawl pipe 215.

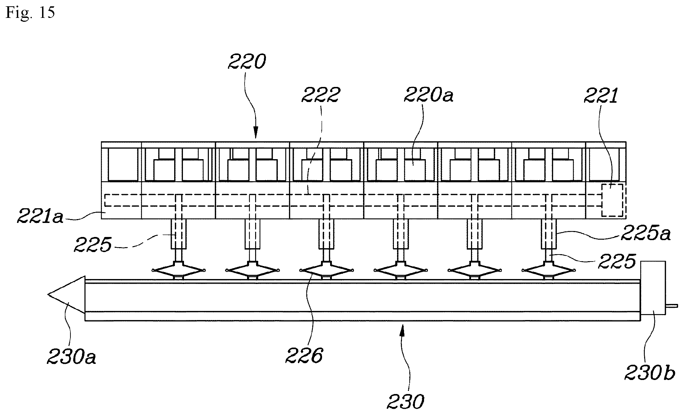

FIG. 15 is a diagram illustrating a side surface of the wing portion 220 according to an exemplary embodiment of the present invention.

Referring to FIG. 15, the wing portion 220 may include a housing 221a housing a driving unit and a suspension 226 connected to the housing 221a and performing buffering in an upper and lower direction. Here, the driving unit may include a second rotation shaft 222 rotated by the second power unit 221 and having a plurality of elevation worm gears 223 provided in the extension direction, an elevation worm wheel rotation shaft 224a rotated in link with the elevation worm gear 223 and located within the extension section, and having the male screw formed on the outer diameter, and an interlocking shaft 225 having a thread corresponding to the screw portion 224b, and withdrawn and introduced in the rotation direction of the screw portion 224b.

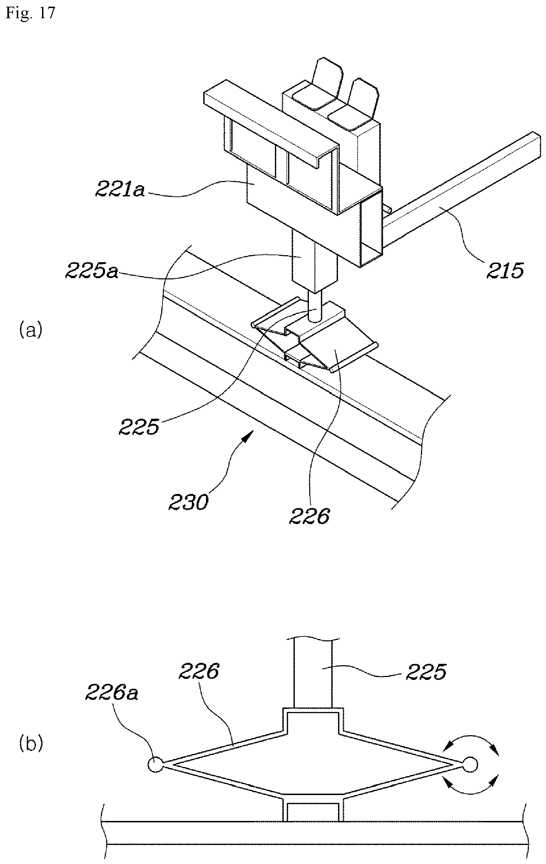

By such a structure, an impact generated in the upper and lower direction at the sea may be absorbed by the suspension 226. In particular, the floating portion 230 may prevent the impact generated upward by fluctuation of the sea level S which is absorbed by the suspension 226 from being transmitted to the entirety of the wing portion 220. This is illustrated in FIG. 17. FIG. 17A illustrates a part of each of the wing portion 220 and the floating portion 230 according to an exemplary embodiment of the present invention and FIG. 17B is a diagram illustrating a suspension 226. The suspension 226 may include the torsion spring 226a.

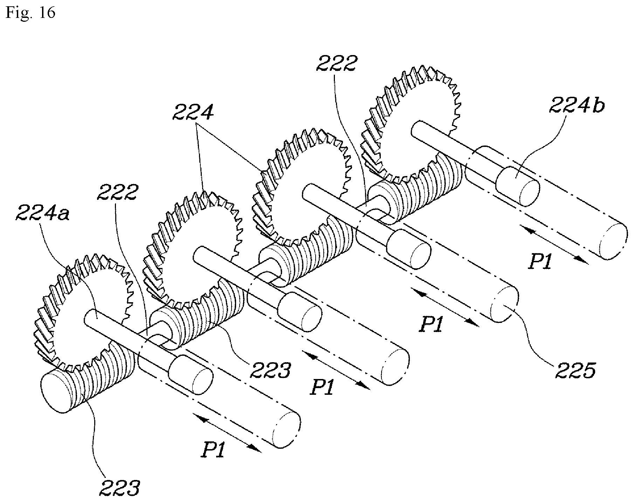

Furthermore, a height of the floating portion 230 may be adjusted and this may be determined by the driving unit. This will be described with reference to FIG. 16 below. FIG. 16 is a diagram a mechanism in which the floating portion 230 moves downward from the wing portion 220 according to an exemplary embodiment of the present invention.

The driving unit may include the second power unit 221 and the second power unit 221 may rotate the second rotation shaft 222. A plurality of elevation worm gears arranged at a predetermined interval in the extension direction may be formed in the second rotation shaft 222, and the elevation worm gear 223 may interlock with the elevation worm wheel gear 224. In the elevation worm wheel gear 224, the elevation worm wheel rotation shaft 224a may be extended from the rotation center and the screw portion 224b may be provided at an extension end of the elevation worm wheel rotation shaft 224a. The screw portion 224b may elevate the interlocking shaft 225 by interlocking with the female screw formed on the inner diameter of the interlocking shaft 225. By such a structure, a plurality of interlocking shafts 225 provided in the wing portion 220 may be simultaneously elevated and the height of the floating portion 230 may be determined.

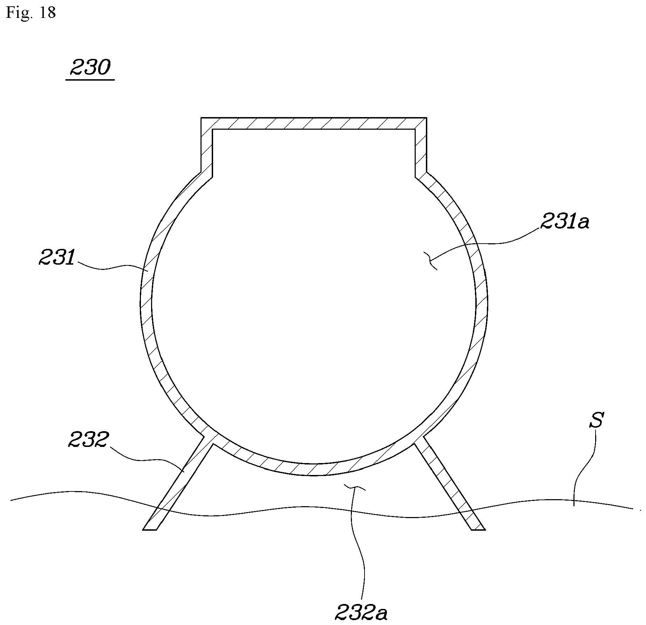

FIG. 18 is a diagram illustrating a cross-sectional view of the floating portion 230 according to an exemplary embodiment of the present invention.

Referring to FIG. 128, the floating portion 230 may have a plurality of hollow portions 231a partitioned from each other therein, and include a plurality of extension portions 232 extended downward from the outer periphery. The floating portion 230 may elongate in the longitudinal direction as illustrated in FIG. 15, but an internal space may be partitioned and provided as the plurality of hollow portions 231a. Even when the plurality of hollow portions 231a are damaged due to external force, only some hollow portions 231a are filled with water and floating force may be maintained by the remaining hollow portions 231a.

Further, the plurality of extension portions 232 are extended downward, and as a result, a space formed between the extension portions 232 may be formed and this may prevent the floating portion 230 from moving below the sea level S in spite of the fluctuation in the upper and lower direction according to a sea condition such as the waves. For example, when there is no extension portion 232, the surface of the floating portion 230 is formed by a curved surface to lose resistance to the sea level S, and as a result, it is difficult that the sail yacht 1 is stably floated from the fluctuation in the upper and lower direction, which occurs at the seat (of course, even when the floating portion 230 is sunk, the floating portion 230 is not floated again and repeatedly sunk and floated to deteriorate the stability of the sail yacht 1).

Therefore, a plurality of extension portions 232 extended downward are formed to prevent a contact surface with the sea level S from being the curved surface, thereby preventing sinking below the sea level S. Through this, the sail yacht 1 may be stably floated even under an unstable sea condition.

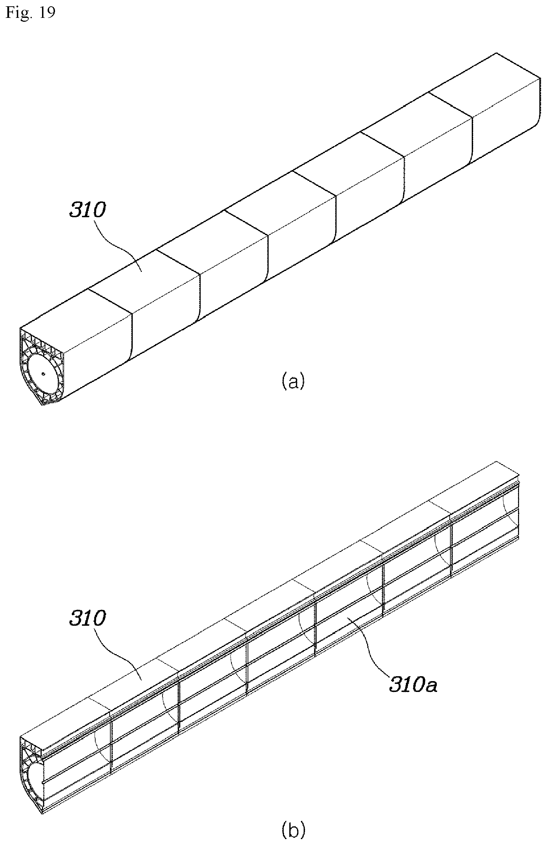

FIG. 19 is a perspective view illustrating the floating body 310 according to an exemplary embodiment of the present invention.

Referring to FIG. 19, the buoyancy unit 30 may include a plurality of floating bodies 310, and the floating body 310 may have a plurality of air spaces 310a which are partitioned from each other and airtightness is maintained therein. In the illustrated buoyancy unit 30, for convenience, stern and bow parts are omitted, and it should be construed that a stern and a bow also have the same technical elements.

As illustrated, the buoyancy unit 30 may be configured by bonding the plurality of floating bodies 310 in the longitudinal direction of a ship body. Each floating body 310 includes the air space 310a therein, so airtightness and watertightness may be maintained between the bonded floating bodies 310. The floating body 310 may be manufactured through injection, and may be made of a material which is relatively light and is comparatively easily manufactured, such as a resin material, plastic, etc. This generally means excluding a metallic material, but the metallic material satisfying the condition may also become a material of the floating body 310.

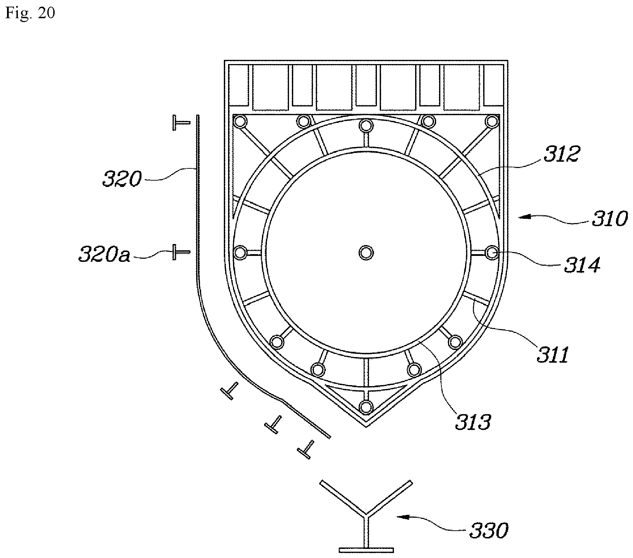

FIG. 20 is a cross-sectional view illustrating the air space 310a of the floating body 310 according to an exemplary embodiment of the present invention.

Referring to FIG. 20, a plurality of air spaces 310a partitioned from each other may be consecutively arranged and configured in the ring type in the floating body 310. This may be a structure in which when the floating body 310 is damaged from external force, each air space 310a is partitioned and separated in order to minimize a region into which the water such as the seawater flows by the partitioned air space 310. Therefore, the air space 310a may be configured in the ring type surrounding the outside centering on the center.

As described above, the floating body 310 may be manufactured through the injection, and may include one or more reinforcing materials 314 that maintain a coupling state between the floating bodies 310 and increase a strength. The reinforcing material 314 may be a metallic pipe. The reinforcing material 314 may be coupled through welding (provisionary bonding), assembling, etc., in coupling between the floating bodies 310.

Further, the buoyancy unit 30 may include a reinforcing shell 320 coupled to at least a part of the outer periphery of the floating body 310, and the reinforcing shell 320 may be coupled to the floating body 310 by sequentially penetrating the reinforcing shell 320 and the reinforcing material 314 by a fixation portion 320a. The reinforcing shell 320 may be a component which is made of the metallic material and used for protecting the floating body 310 from the external force. The reinforcing shell 320 may be fixed by the fixation portion 320a to be coupled to the floating body 310, and the fixation portion 320a may be selectively determined among components such as a fastener, rivet, etc. Of course, a coupling portion penetrated in a coupling process may be subjected to water-proof processing.

Further, the buoyancy unit 30 may further include a low reinforcing material 330 coupled to the bottom surface of the reinforcing shell 320 and extended toward the stern from the bow in a coupling direction of the floating body 310. The buoyancy unit 30 as a structure for preventing the damage of the floating body 310 which may occur due to the collision with an undersea feature may be coupled in the longitudinal direction of the buoyancy unit 30. The low reinforcing material 330 may be coupled through the fastener and the rivet. Here, the fixation portion 320a is coupled to the reinforcing material 314 through the penetration and prevents a third partition unit 313 from being damaged.

A partition unit partitioning the air space 310a may include a first partition unit 311 partitioning the air space 310a arranged in the ring type, a second partition unit 312 located at an outermost side of the air space 310a arranged in the ring type, and a third partition unit 313 located at an innermost side of the air space 310a arranged in the ring type. Of course, although not corresponding thereto as illustrated in FIG. 20, another type of partition unit may also be additionally formed as necessary.

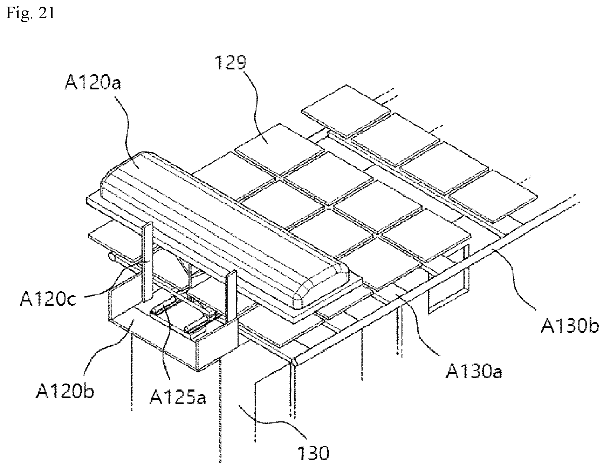

FIG. 21 is a diagram illustrating a connection frame A130b and an extension board A130a according to another embodiment of the present invention.

Referring to FIG. 21, the first guide 122 guiding the first interlocking wire in the X axis direction on the plane and the second guide 127 guiding the second interlocking wire in the Y axis direction may be included, and the second guide 127 may exceed a width of the cabin 130 supporting the power generation module, but may be fixed to a plurality of extension boards A130a extended in the Y axis direction on the cabin 130 and arranged in the X axis direction, and the plurality of extension boards A130a are connected by the connection frame A130b of which both ends are extended in the X axis direction to form a fluid passing area between the plurality of extension boards A130a.

Here, the X and Y axis directions may be arbitrarily determined, and in the example, the cooling unit A120a may reciprocate in the X axis direction. The extension board A130a may be arranged at a predetermined interval in the X axis direction, and each end may be connected by the connection frame A130b. According to such a structure, a fluid may pass through a space formed in a separated distance between the extension boards A130a. The fluid may also be the wind and may also be water which comes to the ship by the waves.

The extension board A130a may be fixed to support the second guide 127 upward, and as a result, the panel part 129 may be disposed in a region further expanded than the width of the cabin 130. In this case, more energy may be stored through the expanded panel part 129, and the fluid passing area is formed below the panel part 129 to reduce the resistance to the fluid of the sail yacht during sailing.

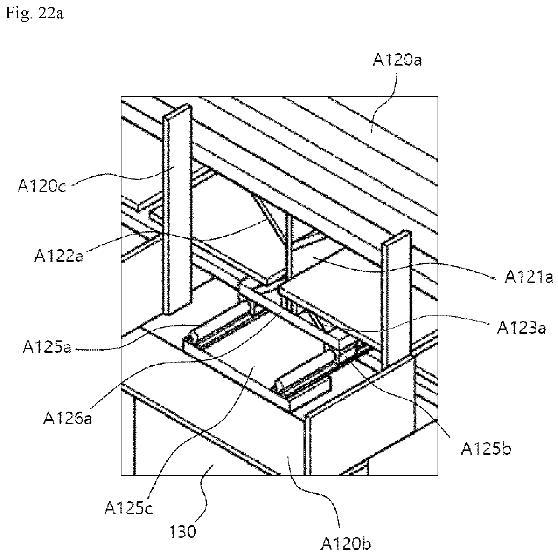

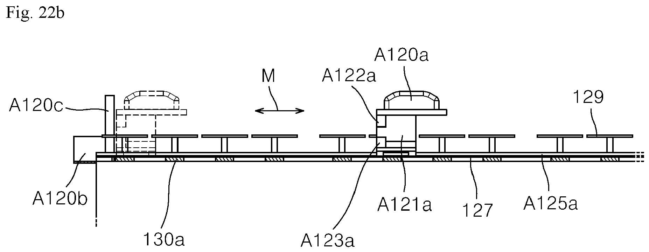

FIG. 22A is a diagram illustrating that the cooling unit A120a and a cabin 130 are connected according to another embodiment of the present invention and FIG. 22B is a diagram illustrating movement of the connected cooling unit A120a according to another embodiment of the present invention.

Referring to FIG. 22, as another embodiment of the present invention, the power generation unit may include a cooling unit A120a spraying and cooling the cooling water to the panel part and a guide rail A125a guiding the movement direction of the cooling unit A120a, and the guide rail A125a is extended in the direction in which the panel part is arranged to allow the cooling unit A120a to move along the array of the panel part. Unlike an exemplary embodiment described above, the cooling unit A120a sprays water for cooling and washing while moving on the panel part 129, and does not move in connection with edges which are both ends of the panel part 129, but move to the center of the panel part.

Here, the center may mean the center of the array of the panel part 129, and in the example, the cooling unit A120a may move while crossing the center of the panel parts arranged in four columns. For the movement of the cooling unit A120a, the guide rail A125a may be provided in the movement direction. Referring to FIG. 22A, the cooling unit A120a is connected to a sliding block A125b to be coupled to the guide rail A125a to reciprocate on the guide rail A125a. Energy provided for reciprocation as electric energy is generated by a power transmission means through a hydraulic cylinder or the motor.

The cooling unit A120a may move on the panel part 129, and the guide rail A125a may be located below the panel part 129 and extended. In this case, the first guide 122 and the second guide 127 may be extended while crossing each other as described above, and the guide rail A125a is located above the first guide 122 and the second guide 127 in order to avoid interference with the first guide 122 and the second guide 127 to avoid interference with the extension path of the guide rail A125a.

The guide rail A125a may slide in connection with a sliding block A125b and the sliding block A125b may be bonded to a seating plate A126a. An end of a transport plate A121c extended upward from the seating plate A126a via the panel part 129 may be coupled to the cooling unit A120a. In order to more solidifying coupling between the transport plate A121c and the seating plate A126a and coupling between the transport plate A121c and the cooling unit A120a, a first support A122a and a second support A123a may also be provided. Further, a stopper A120c provided on the support frame A120b is extended upward from the cabin 130 to prevent the cooling unit A120a from being separated from the guide rail A125a in the process of moving along the guide rail A125a.

As illustrated in FIG. 22B, through this, the cooling unit A120a may move without interference with the first guide 122 and the second guide 127 in the movement direction within a predetermine direction in which the guide rail A126a is extended.

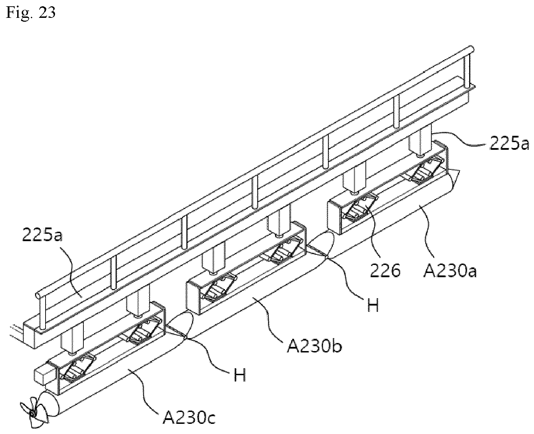

FIG. 23 is a diagram illustrating a floating portion according to another embodiment of the present invention.

Referring to FIG. 23, as another embodiment of the present invention, the floating portion may be divided into at least a plurality of parts. According to the example, the floating portion may be divided into a first floating portion A230a, a second floating portion A230b, and a third floating portion A230c, and the respective floating portions may be connected by a link unit connecting the floating portions to each other. For example, the first floating portion A230a may be provided to correspond to the suspensions 226 connected to a pair of extension guide portions 225a. Since each of the suspension 226 applied to the sail yacht independently reacts, each floating portion connected to each suspension 226 may independently react.

However, the first floating portion A230a, the second floating portion A230b, and the third floating portion A230c are connected to each other by the link unit to have an interlocking movement based the link unit. The link unit has a hinge form, so rotation between adjacent floating portions may be achieved. Accordingly, the suspension independently driven in response to a maritime environment such as the waves determines the movement of each floating portion, but a displacement in a rotating direction based on the link unit may act as a cause of interlocking between the floating portions.

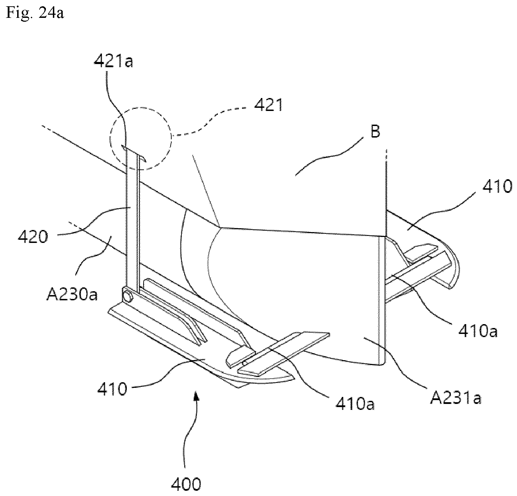

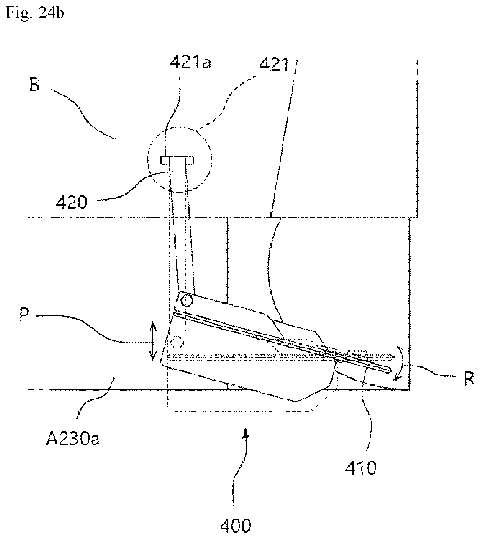

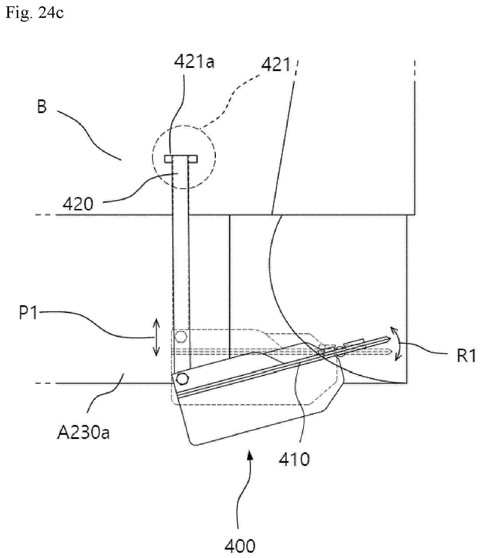

FIG. 24 illustrates a blade according to another embodiment of the present invention.

Referring to FIGS. 24A to 24(c), the blade may further include a rotation fin connecting one end side of a steering fin to be rotatable with the buoyancy unit and a driving rod connected to the other end side to transmit rotation power from the power unit so that the other end side of the steering fin rotates centering on the rotation pin.

Specifically, the steering fin is disposed, for example, in a horizontal direction, but may be steered to be angle-separated from the horizontal direction automatically or manually to be tilted. In the case of the steering, the steering fin may be steered while being rotated based on the rotation pin. In the case of the example, separate power is not connected to the steering fin and the steering fin is connected to a ship body so as to freely rotate, and the free rotation ma be caused by reciprocation of the driving rod. The reciprocation may be the upper and lower direction as in the example, and the driving rod may be reciprocated by the power unit provided in a part of an inner side of the ship body (e.g., a base structure B). The power unit may be implemented by transmitting the power by a cylinder or an engaged structure.

Meanwhile, when a rotation angle R1 of the steering fin is formed by introduction of the driving rod as illustrated in FIG. 24(b), the fluid may apply resistance to the top surface of the steering fin. The resistance may generate force of suppressing the rotation fin and a bow portion 310b which is an extended ship body. Therefore, a degree of the force is selectively generated by an introduction degree of the driving rod according to the waves to maintain stable sailing.

Of course, when the rotation angle R1 of the steering fin is formed by withdrawal of the driving rod as illustrated in FIG. 24(c), the fluid may apply resistance to the bottom surface of the steering fin. The resistance may generate force of lifting the rotation fin and the bow portion 310b which is the extended ship body upward. Therefore, a degree of lifting force is selectively generated by a withdrawal degree of the driving rod according to the waves to maintain the stable sailing.

Although representative embodiments of the present invention have been described in detail hereinabove, it will be appreciated by those skilled that various modifications of the exemplary embodiment of the present invention can be made in the art within a limit without departing from the scope of the present invention. Therefore, the scope of the present invention should not be limited to the exemplary embodiments and should be defined by the appended claims and equivalents to the appended claims.

## Claims

1. A sail yacht providing driving force through solar power generation, which is operated by the solar power generation, comprising:
a power generation unit including a power generation module performing solar power generation;
a wing unit located on the bottom of the power generation unit and stretching to a side from a center;
a buoyancy unit allowing floating from a sea level on the bottom of the wing unit; and
a blade including a steering fin extended to a front at a front side of the buoyancy unit.

2. The sail yacht operated by the solar power generation of claim 1, wherein the power generation unit includes a first frame which is towed by a first wire, and rotatable and erectable upward, and a pair of second frames which are towed by a second wire, and each rotated and extended to the side.

3. The sail yacht operated by the solar power generation of claim 2, wherein the power generation unit includes a first sail which may be connected to the first frame and selectively extended, and a second sail which may be wound on the second frame and selectively extended, and
the second sail is reversely wound from the second frame, and extended upward along the erected first frame when being extended.

4. The sail yacht operated by the solar power generation of claim 2, wherein the power generation unit includes a power generation module, and
the power generation module includes a panel part facing the sun, an interlocking wire interlocking with the panel part, and a motor tossing the interlocking wire and steering the panel part to face the sun.

5. The sail yacht operated by the solar power generation of claim 4, wherein the panel part is independently steered with X and Y directions as axis on the plane, and
the interlocking wire includes a first interlocking wire towing the panel part to be steered based on an X axis and a second interlocking wire towing the panel part to be steered based on a Y axis, and the motor may include a first motor transmitting towing power to the first interlocking wire and a second motor transmitting the towing power to the second interlocking wire.

6. The sail yacht operated by the solar power generation of claim 4, wherein the interlocking wire is connected to the panel part, but an elastic body is provided in a connection path.

7. The sail yacht operated by the solar power generation of claim 4, wherein the power generation unit includes a cooling unit spraying cooling water to the panel part and cooling the panel part, and a guide rail guiding a movement direction of the cooling unit, and
the guide rail is extended in a direction in which the panel part is arranged to allow the cooling unit to move along an array of the panel part.

8. The sail yacht operated by the solar power generation of claim 1, wherein the buoyancy unit includes a link unit which independently rotates at least centering on a shaft, and a first floating portion and a second floating portion which interlock with each other through the link unit.

9. The sail yacht operated by the solar power generation of claim 2, wherein the second frame includes
a pair of elastic units elastically towing the second wire at both end,
a roller switching an extension path on the extension path of the second wire, and
a steering motor which is rotated forward or rotated reversely while winding the second wire on the extension path of the second wire, and determining a rotation direction.

10. The sail yacht operated by the solar power generation of claim 1, wherein the wing unit includes
a base portion interposed between the power generation unit and the buoyancy unit,
a pair of wing portions stretching to both sides centering on the base portion, and
a plurality of extension portions provided on the bottoms of the wing portions, respectively, having a plurality of hollow portions partitioned from each other therein, and extended downward from an outer periphery.

11. The sail yacht operated by the solar power generation of claim 10, wherein the base portion includes
a first power unit,
a first rotation shaft rotated by the first power unit and having a plurality of wing worm gears provided in the extension direction,
a wing worm wheel rotation shaft rotated in link with the wing worm gear and located within an extension section, and having a male screw portion formed on an outer diameter,
a withdrawal pipe having a female screw corresponding to the male screw portion provided on an inner diameter, and withdrawn and introduced in a rotation direction of the male screw, and
base pipes having an inner periphery corresponding to an outer periphery of the withdrawal provided therein, and guiding the withdrawal to be withdrawn or introduced while not being rotated.

12. The sail yacht operated by the solar power generation of claim 10, wherein the wing unit includes
a housing accommodating a driving unit, and
a suspension connected to the housing and performing buffering in an upper and lower direction, and
the driving unit includes
a second rotation shaft rotated by the second power unit and having a plurality of elevation worm gears provided in the extension direction,
a wing worm wheel rotation shaft rotated in link with the elevation worm gear and located within an extension section, and including a screw portion having a male screw formed on an outer diameter, and
an interlocking shaft having a thread corresponding to the screw portion, and withdrawn and introduced in the rotation direction of the screw portion.

13. The sail yacht operated by the solar power generation of claim 5, wherein a first guide guiding the first interlocking wire in the X axis direction on the plane and a second guide guiding the second interlocking wire in the Y axis direction are included,
the second guide exceeds a width of a cabin supporting the power generation module, but is fixed to a plurality of extension boards extended in the Y axis direction on the cabin and arranged in the X axis direction, and
the plurality of extension boards are connected by the connection frame of which both ends are extended in the X axis direction to form a fluid passing area between the plurality of extension boards.

14. The sail yacht operated by the solar power generation of claim 1, wherein the buoyancy unit includes a reinforcing shell coupled to at least a part of the outer periphery of the floating body, and the reinforcing shell is coupled to the floating body by sequentially penetrating the reinforcing shell and the reinforcing material by a fixation portion,
the floating body has a plurality of air spaces which are partitioned from each other and airtightness is maintained therein, and at least some of the air spaces are partitioned from each other and consecutively arranged and configured in a ring type, and
the floating body includes one or more reinforcing materials which are manufactured through injection and maintain a coupling state between the floating bodies.

15. The sail yacht operated by the solar power generation of claim 1, wherein the blade further includes
a rotation fin connecting one end side of a steering fin to be rotatable with the buoyancy unit, and
a driving rod connected to the other end side to transmit rotation power from the power unit so that the other end side of the steering fin rotates centering on the rotation pin.
